(19) Europäisches Patentamt
European Patent Office
Office européen des brevets

(11) EP 0 965 606 A1

(12) EUROPÄISCHE PATENTANMELDUNG

(43) Veröffentlichungstag:
**22.12.1999 Patentblatt 1999/51**

(51) Int. Cl.[6]: **C08G 67/02**, B01J 31/24, B01J 31/18

(21) Anmeldenummer: **99111278.0**

(22) Anmeldetag: **10.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.06.1998 DE 19826999**

(71) Anmelder:
**BASF AKTIENGESELLSCHAFT**
**67056 Ludwigshafen (DE)**

(72) Erfinder:
- **Queisser, Joachim, Dr.**
  **68165 Mannheim (DE)**
- **Bidell, Wolfgang, Dr.**
  **67112 Mutterstadt (DE)**
- **Süling, Carsten, Dr.**
  **67227 Frankenthal (DE)**

# (54) Verfahren zur Herstellung von geträgerten Übergangsmetallkatalysatoren

(57) Verfahren zur Herstellung von geträgerten Übergangsmetallkatalysatoren, bei dem man zu einem partikulären organischen oder anorganischen Trägermaterial unter Erneuern der durch das Trägermaterial gebildeten Oberfläche langsam die Lösung eines definierten Übergangsmetallkomplexes auf der Basis der Elemente der Gruppen VIII B, IB und IIB des Periodensystems der Elemente gibt, der gegebenenfalls ein Cokatalysator beigefügt ist, wobei das Volumen der Lösung das zweifache Porenvolumen des Trägermaterials nicht übersteigt.

EP 0 965 606 A1

## Beschreibung

Die vorliegende Erfindung betrifft ein Verfahren zur Herstellung von geträgerten Übergangsmetallkatalysatoren auf der Basis der Elemente der Gruppen VIIIB, IB und IIB des Periodensystems der Elemente, deren Verwendung für die Herstellung von Copolymeren aus Kohlenmonoxid und $\alpha$-olefinisch ungesättigten Verbindungen sowie ein Verfahren für die Herstellung von Copolymeren aus Kohlenmonoxid und $\alpha$-olefinisch ungesättigten Verbindungen.

Geträgerte Übergangsmetallkatalysatoren werden sowohl für die Olefinpolymerisation als auch für die Copolymerisation von Kohlenmonoxid mit $\alpha$-olefinisch ungesättigten Verbindungen eingesetzt. Geträgerte Systeme haben den Vorteil, daß sich über die Morphologie der geträgerten Katalysatorpartikel die Morphologie des Polymerproduktes steuern läßt. Beispielsweise werden Ziegler-Natta- oder Phillips-Katalysatoren bei der Herstellung von Polyolefinen in geträgerter Form eingesetzt ("Ziegler Catalysts", G. Fink, R. Mülhaupt, H.-M. Brintzinger (Hrsg.), Springer-Verlag, Heidelberg, 1995; Advances in Catalysis, 1985, 33, S. 47 - 97) . Ebenso finden geträgerte Metallocenkatalysatoren auf der Basis von Metallen der Gruppe IV B des Periodensystems der Elemente bei der Olefinpolymerisation Verwendung (vgl. Makromol. Chem. Phys. 1994, 195, S. 3347; Macromol. Rapid Commun. 1994, 15, 139-143; Angew. Chem. Int. Ed. Engl. 1995, 34, S. 1143 - 1170).

Verfahren zur Synthese trägerfixierter Katalysatoren auf der Basis von Metallocenkomplexen finden sich z.B. in der europäischen Patentanmeldung EP-A-0 308 177 sowie in den US-Patentschriften US 4,897,455, US 4,912,075 und US 5,240,894 beschrieben.

In der EP-A-0 308 177 wird beispielsweise ein definierter Zirconocenkomplex zusammen mit einem Cokatalysator auf calciniertem Silicagel als Trägermaterial aufgetragen, indem man die Komponenten in einem inerten unpolaren Lösungsmittel vermengt und das Lösungsmittel im Vakuum entfernt. Beispiele für analoge Vorgehensweisen, bei denen ein in einem Lösungsmittel gelöster Katalysator, gegebenenfalls mitsamt Cokatalysator durch Entfernen des Lösungsmittels auf einen Träger aufgebracht wird, finden sich auch in WO 95/07939.

Katalysatorkomplexe, die auf die Elemente der Gruppe VIII B des Periodensystems der Elemente zurückgehen, können ebenfalls auf Trägermaterialien aufgebracht werden und finden z.B. bei der Herstellung von Copolymeren aus Kohlenmonoxid und olefinisch ungesättigten Verbindungen Anwendung. In der EP-A-0 559 288 und EP-A-0 559 289 wird ein Verfahren zur Herstellung von auf calciniertem Silicagel fixierten Palladiumkomplexen beschrieben. Dazu wird zunächst ein Palladiumcarbamatkomplex auf das Trägermaterial aufgetragen. Das derart geträgerte System wird mit einem bidentaten Chelatliganden umgesetzt, bevor es in der Suspensionspolymerisation eingesetzt werden kann. Zur Aktivierung des geträgerten Katalysators ist der Zusatz einer Säure erforderlich.

Gemäß EP-A-0 722 968 kann man einen definierten Katalysatorkomplex, beispielsweise $Pd(dppp)(OAc)_2$ (dppp = 1,3-Diphenylphosphinopropan) auf einen Silicagelträger aufbringen. Dieses gelingt zum Beispiel durch Vermengen einer Lösung des Metallkomplexes mit calciniertem Silicagel in Dichlormethan. Zum geträgerten Katalysatorsystem gelangt man durch Entfernen des Lösungsmittels im Vakuum. Es bedarf jedoch der Zugabe einer großen Menge an Boran-Cokatalysator, um zufriedenstellende Produktivitäten zu erhalten. Diese Vorgehensweise ist einerseits kostenintensiv, andererseits wird das erhaltene Copolymerisat mit einer weiteren Verbindung, dem Cokatalysator, verunreinigt.

Die bekannten Verfahren zur Herstellung von geträgerten Katalysatoren auf der Basis von Übergangsmetallkomplexen haben zudem den Nachteil, daß sie häufig nicht zu einer gleichmäßigen Beladung des Trägermaterials mit dem Katalysator führen. Gleichfalls tritt Filmbildung an der Innenwandung des Reaktionsgefäßes auf, wenn das Lösungsmittel während des Trägerungsprozesses destillativ entfernt wird. Des weiteren erhält man häufig geträgertes Material, das mit partikulären Rückständen, die ausschließlich aus Katalysatorkomponente bestehen und demgemäß ungeträgert vorliegen, kontaminiert ist. Eine ungleichmäßige Beladung der Trägerpartikel ist die Folge. Diese Trägerungsverfahren bringen zwangsläufig als Verfahrensschritte die Isolierung des geträgerten Katalysators und die Verwendung eines separaten Polymerisationsgefäßes mit sich, wenn nicht völlig inhomogene Katalysatorgemische, enthaltend gelöste neben geträgerter Komponente, in Kauf genommen werden sollen.

Bei der destillativen Abtrennung des Lösungsmittels zur Isolierung des geträgerten Katalysators besteht zudem die Gefahr, daß die Destillationsbedingungen nicht immer hinreichend schonend genug ausgelegt werden können und der Katalysator zerstört wird.

Bei anorganischen Trägermaterialien wie Silicagel beobachtet man häufig, daß die Trägerpartikel während des Trägerungsverfahrens zu Feinstaub zerrieben werden. Dieser Feinstaubanteil ist verfahrenstechnisch von Nachteil, da er zu einer elektrostatischen Aufladung der Trägerpartikel im Reaktionsgefäß führt und darüber hinaus die Morphologie des Polymerproduktes negativ beeinflußt.

Die geschilderten Nachteile werden umgangen, wenn man, wie in der deutschen Patentanmeldung 19746279 beschrieben, den Übergangsmetallkomplex kontrolliert auf dem Trägermaterial ausfällt. Dieses erfordert allerdings zum einen die Verwendung zweier nicht mischbarer Lösungsmittelsysteme sowie zum anderen die schonende Isolierung des geträgerten Katalysatorsystems. Außerdem sind grundsätzlich relativ große Lösungsmittelmengen zu verwenden. Die in der genannten deutschen Anmeldung offenbarten Trägerungsverfahren sind demzufolge mit keinem geringen

apparativen Aufwand verbunden und erfordern auf jeden Fall die Herstellung des geträgerten Katalysators in einem separaten Reaktionsgefäß.

Es wäre demgemäß wünschenswert, auf ein Trägerungsverfahren zurückgreifen zu können, das die genannten Nachteile nicht aufweist. Der vorliegenden Erfindung lag daher die Aufgabe zugrunde, ein Verfahren zur Herstellung von geträgerten Katalysatorsystemen zur Verfügung zu stellen, das eine gleichmäßige Katalysatorbeladung auf dem Trägermaterial gewährleistet, ohne daß es zu einer Filmbildung auf der Innenwand des Reaktionsgefäßes kommt, und gleichzeitig technisch einfach durchzuführen ist.

Demgemäß wurde ein Verfahren zur Herstellung von geträgerten Übergangsmetallkomplexen gefunden, bei dem zu einem partikulären organischen oder anorganischen Trägermaterial unter Erneuern der durch das Trägermaterial gebildeten Oberfläche langsam die Lösung eines definierten Übergangsmetallkomplexes auf der Basis der Elemente der Gruppen VIIIB, IB und IIB des Periodensystems der Elemente gegeben wird, die gegebenenfalls einen Cokatalysator enthält, wobei das Volumen der Lösung das zweifache Porenvolumen des Trägermaterials nicht übersteigt.

Des weiteren wurde die Verwendung der geträgerten Übergangsmetallkomplexe für die Herstellung von Copolymeren aus Kohlenmonoxid und $\alpha$-olefinsch ungesättigen Verbindungen gefunden.

Außerdem wurde ein Verfahren zur heterogen-katalytischen Herstellung von linearen, alternierenden Copolymeren aus Kohlenmonoxid und $\alpha$-olefinisch ungesättigten Verbindungen unter Verwendung der gemäß dem erfindungsgemäßen Trägerungsverfahren erhaltenen Metallkomplexe und einer Aktivatorverbindung gefunden.

Geeignete Trägermaterialien können organischer oder anorganischer Natur sein. Die Trägermaterialien weisen vorzugsweise einen mittleren Teilchendurchmesser zwischen 10 und 300 $\mu$m, insbesondere von 30 bis 80 $\mu$m auf.

Als organische Träger sind in partikulärer Form vorliegende Materialien geeignet. Es kommen Aktivkohle, Cellulose, Dextran, Dextrose oder organische Polymere oder Copolymere in Frage. Unter Polymere und Copolymere fallen beispielsweise Polyolefine wie Polyethylen, Polypropylen, Poly-1-buten und Polymethyl-1-penten und Copolymere mit den diesen Polymeren zugrunde liegenden Monomeren, weiterhin Polyester, Polyamide, Polyvinylchlorid, Polyacrylate und -methacrylate sowie Polystyrol. Von besonderer Bedeutung sind Copolymere, insbesondere ternäre Copolymere aus Kohlenmonoxid und olefinisch ungesättigten Verbindungen wie Ethen, Propen oder 1-Buten, also zum Beispiel ein Kohlenmonoxid/Ethen/Propen-oder ein Kohlenmonoxid/Ethen/1-Buten-Terpolymer. Die geeigneten organischen Trägermaterialien werden in der Regel als getrocknete Polymerpulver eingesetzt. Die polymeren Trägersysteme können nach allgemein bekannten Verfahren hergestellt werden.

Als anorganische Trägermaterialien kommen Materialien wie Silicagel, Aluminium-, Magnesium-, Titan-, Zirkonium-, Bor-, Calcium- oder Zinkoxide, Alumosilikate, Polysiloxane, Talkum, Schichtsilikate oder Zeolithe in Frage. Auch Metallhalogenide wie $MgCl_2$ kommen als Träger in Betracht. Besonders bevorzugte Träger sind beispielsweise Kieselgele, bevorzugt solche der Formel $SiO_2$ - a $Al_2O_3$, worin a für eine Zahl im Bereich von 0 bis 2 steht, vorzugsweise 0 bis 0,5, also Alumosilikate oder Siliciumdioxid. Als Silicagele sind geeignet granuläres Silicagel, zum Beispiel das Handelsprodukt SG 332 der Fa. Grace, silyliertes Silicagel, erhältlich aus herkömmlichem Silicagel durch Behandeln mit Halogensilanen, z. B. Trimethylchlorsilan, passiviertes Silicagel, erhältlich durch Behandeln von herkömmlichem Silicagel mit Aluminiumtrialkylen, oder sphärisches Silicagel, zum Beispiel Silicagel ES 70x der Fa. Crosfield. Polysiloxane, z.B. das Produkt Deloxan der Fa. Degussa, sowie saure Schichtsilikate, z.B. das Produkt K10 der Fa. Südchemie, können ebenfalls als Trägermaterialien eingesetzt werden. Des Weiteren können pyrogene Kieselsäuren eingesetzt werden, d.h. hochdisperse Kieselsäuren, die üblicherweise durch Flammenhydrolyse von Siliciumtetrachlorid in der Knallgasflamme hergestellt werden. Pyrogene Kieselsäuren zeichnen sich durch eine nahezu porenfreie Oberfläche der Primärpartikel aus und verfügen über eine reduzierte Anzahl freier Hydroxylgruppen. Besonders bevorzugt wird auf Silicagele, insbesondere sphärische oder granuläre Silicagele zurückgegriffen. Diese Silicagele weisen im allgemeinen einen mittleren Partikeldurchmesser von 10 bis 100 $\mu$m, insbesondere von 30 bis 80 $\mu$m auf. Die spezifische Oberfläche (BET) liegt bei den bevorzugten Silicagelen in der Regel im Bereich von 50 bis 1000 $m^2$/g, insbesondere im Bereich von 100 bis 400 $m^2$/g, und das Porenvolumen in der Regel bei 0,5 bis 5 ml/g, insbesondere bei 1,0 bis 3,5 ml/g. Es hat sich als vorteilhaft erwiesen, die Silicagele, Alumosilikate und Aluminiumoxide vor der Trägerung von Resten physisorbierten Wassers zu befreien. Dazu werden diese Materialien bei erhöhter Temperatur, bevorzugt bei Temperaturen im Bereich von 100 bis 300°C, insbesondere von 140 bis 220°C über mehrere Stunden, beispielsweise über 15 bis 25 Stunden bei einem Druck von etwa 1 mbar, möglicherweise auch darunter, gehalten. Silicagele weisen nach dieser Behandlung gemäß Van der Voort et al., J. Chem. Soc. Faraday Trans. 1990, 85, 3751 üblicherweise einen Hydroxygruppenanteil von etwa 5 bis 6 OH/100 $Å^2$ auf. Calciniert man bei etwa 800°C unter den aufgeführten Bedingungen, so reduziert sich der Hydroxygruppenanteil auf 1-2 OH/100 $Å^2$. Zur Optimierung der Wechselwirkung zwischen Träger und der zu fixierenden Metallkomplexverbindung können die funktionellen Gruppen anorganischer Trägermaterialien, z.B. Silicagele oder Aluminiumoxide, gezielt modifiziert werden. Beispielsweise läßt sich das Oberflächenverhalten von Silicagelen oder Aluminiumoxiden durch Behandlung mit Halogensilanen, Halogenboranen, Aluminiumalkylen oder Boralkylen oder deren Mischungen oder mit Aminosilanen einstellen.

In einer bevorzugten Ausführungsform weisen Oberflächen der beschriebenen Trägermaterialien einen pH-Wert im Bereich von 3 bis 7, bevorzugt von 3,5 bis 6,5 und besonders bevorzugt von 4 bis 6 auf.

Als Lösungsmittel kommen für das erfindungsgemäße Verfahren im allgemeinen alle flüssigen Medien in Frage, in denen der Übergangsmetallkomplex eine gute Löslichkeit besitzt. Geeignet sind beispielsweise polare aprotische flüssige Medien, also z.B. halogenierte Kohlenwasserstoffe wie Dichlormethan, Dichlorethan oder Chloroform, aromatische Kohlenwasserstoffe wie Toluol, Ethylbenzol oder Xylol, halogenierte aromatische Verbindungen wie Chlorbenzol, aliphatische Ether wie Tetrahydrofuran oder beliebige Gemische dieser Verbindungen. Weiterhin können Acetonitril oder Aceton als flüssige polare aprotische Medien oder als eine Komponente unter mehreren zum Einsatz kommen. Bevorzugt werden Dichlormethan, Aceton, Tetrahydrofuran, Acetonitril oder deren Gemische sowie insbesondere Dichlormethan eingesetzt.

Weiterhin können auch alkoholische Lösungsmittel wie Methanol oder Ethanol eingesetzt werden.

Für die Trägerung in Frage kommende definierte Metallkomplexe sind im allgemeinen solche, in denen ein Übergangsmetall der Gruppen VIIIB, IB oder IIB des Periodensystems mit einem tri- oder bidentaten Liganden chelatisiert ist. Unter definierte Übergangsmetallkomplexe im Sinne der vorliegenden Erfindung sind solche Verbindungen zu verstehen, die nicht erst durch Zusammengeben der Einzelkomponenten während der Trägerung, sondern vorab im Rahmen einer gezielten Synthese erhalten werden und einer Charakterisierung zugänglich sind. Demgemäß verfügt die Gesamtheit der im jeweiligen Fall eingesetzten definierten Übergangsmetallkomplexe im wesentlichen über eine einheitliche Struktur.

Besonders geeignet sind mit bidentaten Liganden chelatisierte Metallkomplexe, die unter die folgende allgemeine Formel (I) fallen

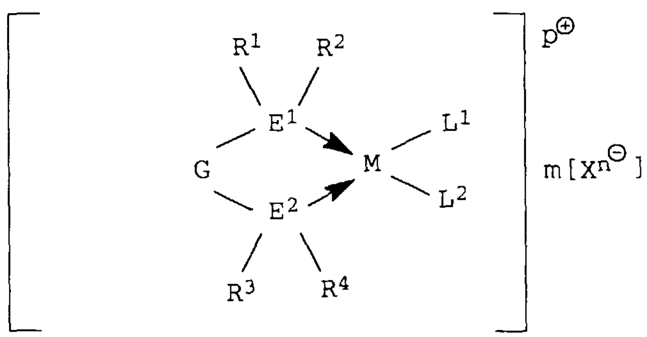

(I)

in der die Substituenten und Indizes die folgende Bedeutung haben:

G $-(CR^b{}_2)_r-$, $-(CR^b{}_2)_s-Si(R^a)_2-(CR^b{}_2)_t-$, -A'-O-B'- oder $-A'-Z(R^5)-B'-$ mit

$R^5$ Wasserstoff, unsubstituiertes oder mit mindestens einer funktionellen Gruppe auf Basis der michtmetallischen Elemente der Gruppen IVA, VA, VIA oder VIIA des Periodensystems der Elemente substituiertes $C_1$- bis $C_{20}$-Alkyl, $C_3$- bis $C_{10}$-Cycloalkyl, $C_6$- bis $C_{15}$-Aryl oder Alkylaryl mit 1 bis 10 C-Atomen im Alkylrest und 6 bis 15 C-Atomen im Arylrest, $-N(R^b)_2$, $Si(R^c)_3$ oder einen Rest der allgemeinen Formel II

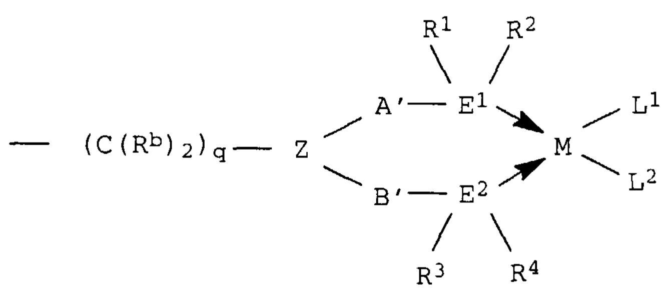

(II),

in der

q eine ganze Zahl von 0 bis 20 bedeutet und die weiteren Substituenten in (II) die gleiche Bedeutung wie in (I) haben,

| | |
|---|---|
| A' B' | $-(CR^b_2)_{r'}-$ oder $-(CR^b_2)_s-Si(R^a)_2-(CR^b_2)_t-$ oder $-N(R^b)-$, ein r'-, s- oder t-atomiger Bestandteil eines Ringsystems oder zusammen mit Z ein (r'+1)-, (s+1)- oder (t+1)-atomiger Bestandteil eines Heterocyclus, |
| $R^a$ | unabhängig voneinander $C_1$- bis $C_{20}$-Alkyl, $C_3$- bis $C_{10}$-Cycloalkyl, $C_6$- bis $C_{15}$-Aryl oder Alkylaryl mit 1 bis 10 C-Atomen im Alkylteil und 6 bis 15 C-Atomen im Arylteil, |
| $R^b$ | wie $R^a$ und zusätzlich Wasserstoff und $Si(R^c)_3$, |
| $R^c$ | $C_1$- bis $C_{20}$-Alkyl, $C_3$- bis $C_{10}$-Cycloalkyl, $C_6$- bis $C_{15}$-Aryl oder Alkylaryl mit 1 bis 10 C-Atomen im Alkylteil und 6 bis 15 C-Atomen im Arylteil, |
| r | 1, 2, 3 oder 4 und |
| r' | 1 oder 2, |
| s, t | 0, 1 oder 2, wobei $1 \leq s+t \leq 3$ |
| Z | ein Element aus der Gruppe VA des Periodensystems der Elemente |
| M | ein Metall ausgewählt aus den Gruppen VIIIB, IB oder IIB des Periodensystems der Elemente, |
| $E^1$, $E^2$ | ein nichtmetallisches Element aus der Gruppe VA des Periodensystems der Elemente, |
| $R^1$ bis $R^4$ | lineares oder verzweigtes $C_1$- bis $C_{20}$-Alkyl, $C_3$- bis $C_{10}$-Cycloalkyl, $C_6$- bis $C_{15}$-Aryl, Alkylaryl mit 1 bis 10 C-Atomen im Alkylrest und 6 bis 15 C-Atomen im Arylrest, Heteroaryl oder mit funktionellen Gruppen auf der Basis der nichtmetallischen Elemente der Gruppen IVA, VA, VIA oder VIIA des Periodensystems substituiertes lineares oder verzweigtes $C_1$- bis $C_{28}$-Alkyl, $C_6$- bis $C_{15}$-Aryl, Alkylaryl mit 1 bis 10 C-Atomen im Alkylrest und 6 bis 15 C-Atomen im Arylrest oder Heteroaryl, |
| $L^1$, $L^2$ | formal geladene oder neutrale Liganden, |
| X | formal ein- oder mehrwertige Anionen, |
| p | 0, 1, 2, 3 oder 4, |
| m, n | 0, 1, 2, 3 oder 4, |
| wobei | $p = m \times n$. |

Als Metalle der erfindungsgemäßen Metallkomplexe eignen sich die Metalle der Gruppen VIIIB, IB und IIB des Periodensystems der Elemente, also beispielsweise neben Kupfer, Silber oder Zink, auch Eisen, Cobalt und Nickel sowie die Platinmetalle wie Ruthenium, Rhodium, Osmium, Iridium und Platin, wobei Palladium ganz besonders bevorzugt ist.

Als Elemente $E^1$ und $E^2$ der Chelatliganden kommen die nichtmetallischen Elemente der 5. Hauptgruppe des Periodensystems der Elemente, also beispielsweise Stickstoff, Phosphor oder Arsen in Betracht. Besonders geeignet sind Stickstoff oder Phosphor, insbesondere Phosphor. Die Chelatliganden können unterschiedliche Elemente $E^1$ und $E^2$ enthalten, so zum Beispiel Stickstoff und Phosphor.

Als Reste $R^1$ bis $R^4$ kommen lineares oder verzweigtes $C_1$- bis $C_{20}$-Alkyl, insbesondere $C_1$- bis $C_{10}$- Alkyl, $C_6$ - bis $C_{15}$ -Aryl, insbesondere $C_6$- bis $C_{10}$ Aryl, Alkylaryl mit 1 bis 20, insbesondere 1 bis 10 C-Atomen im Alkylteil und 6 bis 15, insbesondere 6 bis 10 C-Atomen im Arylteil sowie Heteroaryl in Frage.

Geeignete Alkylreste sind zum Beispiel i-Propyl, s-Butyl, t-Butyl, n-Hexyl oder n-Octyl.

Als Arylreste kommen zum Beispiel Phenyl oder Naphthyl, insbesondere Phenyl, sowie mit funktionellen Gruppen wie Methyl, Ethyl, i-Propyl, t-Butyl, partiell oder perhalogeniertes $C_1$- bis $C_6$-Alkyl, beispielsweise Trifluormethyl oder 2,2,2-Trifluorethyl, Triorganosilyl wie Trimethylsilyl, Triethylsilyl oder t-Butyldiphenylsilyl, Amino, beispielsweise Dimethylamino, Diethylamino oder Di-i-propylamino, Alkoxy, beispielsweise Methoxy, Ethoxy oder t-Butoxy, oder Halogen, wie Fluor, Chlor, Brom oder Jod substituiertes Phenyl oder Naphthyl in Frage.

Bei der Struktureinheit G im Metallkomplex (I) handelt es sich um eine ein- oder mehratomige verbrückende Struktureinheit. Unter einer verbrückenden Struktureinheit wird grundsätzlich eine Gruppierung verstanden, die die Ele-

mente $E^1$ und $E^2$ in (I) miteinander verbindet.

Unter den einatomig verbrückten Struktureinheiten sind solche mit einem verbrückenden Atom aus der Gruppe IVA des Periodensystems der Elemente wie $-C(R^b)_2-$ oder $-Si(R^a)_2-$, worin $R^a$ unabhängig voneinander insbesondere für lineares oder verzweigtes $C_1$- bis $C_{10}$-Alkyl, beispielsweise Methyl, Ethyl, i-Propyl oder t-Butyl, $C_3$- bis $C_6$-Cycloalkyl, wie Cyclopropyl oder Cyclohexyl, $C_6$- bis $C_{10}$-Aryl, wie Phenyl oder Naphthyl, mit funktionellen Gruppen auf der Basis der nichtmetallischen Elemente der Gruppen IVA, VA, VIA oder VIIA des Periodensystems substituiertes $C_6$- bis $C_{10}$-Aryl, beispielsweise Tolyl, (Trifluormethyl)phenyl, Dimethylaminophenyl, p-Methoxyphenyl oder partiell oder perhalogeniertes Phenyl, Alkylaryl mit 1 bis 6 C-Atomen im Alkylteil und 6 bis 10 C-Atomen im Arylteil, beispielsweise Benzyl, und $R^b$ insbesondere für Wasserstoff und daneben für die vorstehend für $R^a$ angegebenen Bedeutungen stehen, bevorzugt. $R^a$ stellt insbesondere eine Methylgruppe, $R^b$ insbesondere Wasserstoff dar.

Unter den mehratomig verbrückten Systemen sind die zwei- und dreiatomig verbrückten Struktureinheiten hervorzuheben, wobei letztere in der Regel bevorzugt eingesetzt werden.

Allgemein sind als Komplexe mit zweiatomig verbrückten Struktureinheiten Verbindungen der allgemeinen Formel (III) geeignet

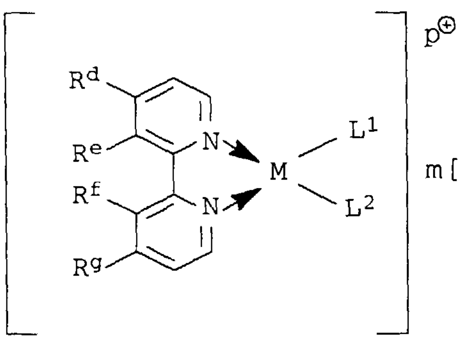 $m[X^{n\ominus}]$ (III),

worin

| | |
|---|---|
| $R^d$, $R^e$, $R^f$, $R^g$ | unabhängig voneinander für Wasserstoff, geradkettiges oder verzweigtes $C_1$- bis $C_6$-Alkyl, wie Methyl, Ethyl oder i-Propyl, oder |
| $R^e$ und $R^f$ | zusammen für einen fünf- oder sechsgliedrigen Carbo- oder Heterocyclus stehen und |

die übrigen Substituenten und Indizes die unter Formel (I) angegebene allgemeine und bevorzugte Bedeutung annehmen können.

Auf zweiatomig verbrückte Struktureinheiten gehen zum Beispiel Chelatliganden wie 1,10-Phenanthrolin, 2,2'-Bipyridin oder 4,4'-Dimethylbipyridin oder deren substituierte Derivate zurück.

Geeignete dreiatomig verbrückte Struktureinheiten basieren im allgemeinen auf einer Kette aus Kohlenstoffatomen, also zum Beispiel Propylen ($-CH_2CH_2CH_2-$), oder auf einer Brückeneinheit mit einem Heteroatom aus der Gruppe IVA, VA oder VIA des Periodensystems der Elemente, wie Silicium, Stickstoff, Phosphor oder Sauerstoff im Kettengerüst.

Bei vollständig aus Kohlenstoffatomen aufgebauten Brücken können die freien Valenzen durch $C_1$- bis $C_6$-Alkyl, wie Methyl, Ethyl oder t-Butyl, $C_6$- bis $C_{10}$-Aryl, wie Phenyl, oder durch funktionelle Gruppen wie Triorganosilyl, Dialkylamino oder Halogen substituiert sein. Geeignete substituierte Propylenbrücken sind zum Beispiel solche mit einer Methyl-, Phenyl- oder Methoxygruppe in 2-Position.

Unter den mehratomig verbrückten Struktureinheiten mit einem Heteroatom im Kettengerüst werden vorteilhaft Verbindungen eingesetzt, in denen Z Stickstoff oder Phosphor, insbesondere Stickstoff bedeutet (s.a. Formel (I)). Der Substituent $R^5$ an Z kann insbesondere bedeuten: Wasserstoff, lineares oder verzweigtes $C_1$- bis $C_{20}$-Alkyl wie Methyl, Ethyl, i-Propyl, t-Butyl, n-Hexyl oder n-Dodecyl, $C_3$- bis $C_{10}$-Cycloalkyl, insbesondere $C_3$ bis $C_8$-Cycloalkyl wie Cyclopropyl oder Cyclohexyl, $C_6$- bis $C_{15}$-Aryl, insbesondere $C_6$- bis $C_{10}$-Aryl, beispielsweise Phenyl, oder Alkylaryl mit 1 bis 10 C-Atomen im Alkylrest und 6 bis 10 C-Atomen im Arylrest, beispielsweise Benzyl.

Unter die genannten Alkyl- und Arylreste fallen sowohl unsubstituierte wie auch substituierte Alkyl- bzw. Arylreste. Die substituierten Reste können zum Beispiel funktionelle Gruppen auf der Basis der nichtmetallischen Elemente der Gruppen IVA, VA, VIA oder VIIA des Periodensystems der Elemente enthalten. Geeignet sind u.a. Triorganosilylgruppen wie Trimethylsilyl oder t-Butyldiphenylsilyl, die Carbonsäuregruppe oder Carbonsäurederivate wie Ester oder Amide, primäre, sekundäre oder tertiäre Aminogruppen wie Dimethylamino oder Methylphenylamino, die Nitro- und die

Hydroxygruppe, des weiteren Alkoxyreste wie Methoxy oder Ethoxy, die Sulfonatgruppe sowie Halogenatome wie Fluor, Chlor oder Brom. Aryl bedeutet im Sinne der vorliegenden Erfindung auch substituiertes und unsubstituiertes Heteroaryl, also zum Beispiel Pyridyl oder Pyrrolidinyl. Unter Alkylreste $R^5$ fallen ebenfalls langkettige Alkylgruppen mit 12 bis 22 C-Atomen in der Kette, die gegebenenfalls über polare protonenaktive oder ionische Funktionalitäten wie die Sulfonsäure-, Carbonsäure-, Hydroxy-, Amino- oder Ammoniumgruppe, vorzugsweise in endständiger Position, verfügen.

Bevorzugt sind als Reste $R^5$ auch solche funktionalisierten Reste, die einen elektronenziehenden Substituenten darstellen. Geeignet als elektronenziehende Substituenten sind zum Beispiel Alkylgruppen mit einem oder mehreren elektronenziehenden Resten wie Fluor, Chlor, Nitril oder Nitro in $\alpha$- oder $\beta$-Position zu Z, beispielsweise Trifluoromethyl, 2,2,2-Triflourethyl oder Nitromethyl. Weiterhin geeignet sind Arylgruppen mit einem oder mehreren der genannten elektronenziehenden Reste, zum Beispiel p-Fluorphenyl, 2,4-Difluorphenyl oder Pentafluorphenyl sowie als direkt an Z gebundene Reste auch die Nitril-, Sulfonat und Nitrogruppe. In diesem Zusammenhang kommen gleichfalls Carbonyleinheiten als Reste $R^5$ in Frage, so daß, wenn Z Stickstoff bedeutet, Z und $R^5$ eine Carbonsäueamidfunktionalität ausbilden. Als ein solcher geeigneter Rest seien die Acetyl- oder die Trifluoracetylgruppe genannt. Bevorzugte Reste $R^5$ sind insbesondere t-Butyl, Phenyl, p-Trifluorphenyl, Trifluormethyl, 2,2,2-Trifluorethyl, Pentafluorphenyl, 2,4-Difluorphenyl und 3,5-Bis(trifluormethyl)phenyl.

Unter den mit einatomig verbrückten Liganden chelatisierten Metallkomplexen (I) sind beispielsweise jene bevorzugt, in denen M als zweiwertig positiv geladenes Palladium vorliegt, die Elemente $E^1$ und $E^2$ Phosphor und die verbrückende Struktureinheit G Methylen, Ethyliden, 2-Propyliden, Dimethylsilylen oder Diphenylsilylen, insbesondere Methylen bedeuten. Vorteilhafterweise weisen die einatomig verbrückten Metallkomplexe Reste $R^1$ bis $R^4$ auf, von denen mindestens einer ein nicht-aromatischer Rest ist. Unter den aromatischen Resten sind vor allem Phenyl und Tolyl hervorzuheben, unter den aliphatischen Resten sind dieses solche mit raumerfüllenden Gruppen, also zum Beispiel t-Butyl, i-Propyl, s-Butyl, Cyclohexyl oder Menthyl.

Besonders bevorzugt sind Metallkomplexe (I), die über eine dreiatomige Verbrückung verfügen. Hierunter fallen zum Beispiel Verbindungen, in denen die Elemente $E^1$ und $E^2$ durch eine Propyleneinheit ($-CH_2CH_2CH_2-$) verbunden werden und die weiteren Substituenten in (I) die folgenden Bedeutung haben:

| | |
|---|---|
| M | Palladium oder Nickel, insbesondere Palladium, |
| $E^1$, $E^2$ | Phosphor oder Stickstoff, insbesondere Phosphor, |
| $R^1$ bis $R^4$ | lineares oder verzweigtes $C_1$- bis $C_{10}$-Alkyl, wie i-Propyl, s-Butyl, t-Butyl, n-Hexyl oder n-Octyl, insbesondere t-Butyl, substituiertes und unsubstituiertes $C_3$- bis $C_6$-Cycloalkyl, wie Cyclopropyl, Cyclohexyl oder 1-Methylcyclohexyl, insbesondere Cyclohexyl, $C_6$- bis $C_{10}$-Aryl, wie Phenyl oder Naphthyl, insbesondere Phenyl, Alkylaryl mit 1 bis 3 C-Atomen im Alkylrest und 5 bis 10 C-Atomen im Arylrest, beispielsweise Benzyl, oder Heteroaryl, wie Pyridyl, oder mit funktionellen Gruppen auf der Basis der nichtmetallischen Elemente der Gruppen IVA, VA, VIA oder VIIA des Periodensystems substituiertes lineares oder verzweigtes $C_1$ - bis $C_{20}$- Alkyl, $C_6$- bis $C_{10}$-Aryl, Alkylaryl mit 1 bis 10 C-Atomen im Alkylrest und 6 bis 10 C-Atomen im Arylrest oder Heteroaryl, |
| $L^1$, $L^2$ | Methanol, Acetonitril, Acetylaceton, Trifluoracetat, Benzonitril, Tetrahydrofuran, Diethylether, Acetat, Tosylat, Wasser oder Chlorid, |
| X | Tetrafluoroborat, Hexafluorophosphat, Hexafluoroantimonat, Pentafluorbenzoat, Trifluormethansulfonat, Trifluoracetat, Perchlorat, p-Toluolsulfonat oder Tetraarylborate wie Tetrakis(pentafluorphenyl)borat oder Tetrakis(3,5-bis(trifluormethyl)phenyl)borat, |
| p | 0, 1, 2, 3 oder 4, |
| m, n | 0, 1, 2, 3 oder 4, |
| wobei | $p = m \times n$ . |

Beispiele für bevorzugte propylenverbrückte Metallkomplexe sind (1,3-Bis(diphenylphosphino)propan-palladium-bis-acetonitril) - bis(perchlorat), (1,3-Bis(diphenylphosphino)propan-palladium-bis-acetonitril) - bis(tetrakis(3,5-bis(trifluormethyl)phenyl)borat), (1,3-Bis(di-2-methoxyphenylphosphino)propan-palladium-bis-aceto-nitril)bis(perchlorat), sowie (1,3-Bis(di-2-methoxyphenylphosphino)propan-palladium-bis-acetonitril)bis(tetrakis(3,5-bis(trifluormethyl)phenyl)borat) sowie die entsprechenden Komplexe, in denen die Bis-acetonitrileinheit durch eine Bis-tetrahydrofuraneinheit ersetzt ist.

Unter den dreiatomig verbrückten Metallkomplexen (I) sind jene mit einer verbrückenden Struktureinheit -A'-N($R^5$)-B'- ebenfalls bevorzugt. Die Substituenten und Indizes in diesen Metallkomplexen (I) nehmen dabei die vorhergehend für propylenverbrückte Systeme beschriebene Bedeutung an.

Als Einheiten A' und B' kommen $C_1$- bis $C_4$ Alkyleneinheiten in substituierter oder unsubstituierter Form in Frage, also beispielsweise Methylen, Ethylen, Propylen oder Ethyliden, Propyliden sowie Benzyliden. Bevorzugt werden Methylen, Ethylen, Ethyliden oder Benzyliden, besonders bevorzugt Methylen eingesetzt. A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-$R^5$ bzw. B'-Z-$R^5$ gebildet wird, d.h. A'-Z-$R^5$ bzw. B'-Z-$R^5$ können z.B. einen substituierten oder unsubstituierten Pyrrolidin- oder Piperidinring ausbilden.

Die bevorzugten Reste $R^5$ entsprechen den bereits weiter oben genannten.

Beispiele für besonders bevorzuge Metallkomplexe (I) sind (Bis(diphenylphosphinomethyl)phenylamin-palladium-bis-acetonitril)bis(perchlorat), (Bis(diphenylphosphinomethyl)phenylamin-palladium-bis-acetonitril)bis(trifluoracetat), (Bis(diphenylphosphinomethyl)phenylamin-palladium-bis-acetonitril)bis(tetrafluoroborat), (Bis(diphenylphosphinomethyl)phenylamin-palladium-bis-acetonitril)bis(tetrakis 3,5-bis(trifluormethyl)phenyl)borat), (Bis(diphenylphosphinomethyl)-t-butylamin-palladium-bis-acetonitril)bis(perchlorat), (Bis(diphenylphosphinomethyl) -t-butylamin -palladium-bis-acetonitril)bis(trifluoracetat), (Bis(diphenylphosphinomethyl) -t-butylamin -palladium-bis-acetonitril)bis(tetrafluoroborat), (Bis(diphenylphosphinomethyl) -t-butylamin -palladium-bis-acetonitril)bis(tetrakis(3,5-bis(trifluomethyl)phenyl)borat), (Bis(diphenylphosphinomethyl)phenylamin-palladium-bis-acetat, (Bis(diphenylphosphinomethyl)-t-butylamin-palladium-bis-acetat, Bis(diphenylphosphinomethyl) (2,4-difluorphenyl)amin-palladium- bis acetat, Bis(diphenylphosphinomethyl)(2,2,2-trifluorethyl)amin-palladium-bis-acetat
sowie
(Bis(diphenylphosphinomethyl)phenylamin-palladium-chlorid-acetonitril)(perchlorat), (Bis(diphenylphosphinomethyl)phenylamin-palladium-chlorid-acetonitril)(trifluoracetat), (Bis(diphenylphosphinomethyl)phenylamin-palladium-chlorid-acetonitril)(tetraflouroborat), (Bis(diphenylphosphinomethyl)phenylamin-palladium-chlorid-acetonitril)(tetrakis(3,5-bis(trifluormethyl)phenyl)borat), (Bis(diphenylphosphinomethyl)-t-butylamin-palladium-chlorid-acetonitril)(perchlorat), (Bis(diphenylphosphinomethyl)-t-butylamin-palladium-chlorid-acetonitril)(trifluoracetat), (Bis(diphenylphosphinomethyl) -t-butylamin -palladium-chlorid-acetonitril)(tetrafluoroborat), (Bis(diphenylphosphinomethyl) -t-butylamin -palladium-chlorid-acetonitril)(tetrakis(3,5-bis(trifluormethyl)phenyl)borat), (Bis(diphenylphosphinomethyl)phenylamin-palladium-chlorid-acetat, (Bis(diphenylphosphinomethyl)-t-butylamin-palladium-chlorid-acetat sowie die entsprechenden Komplexe, in denen die Acetonitrileinheiten durch Tetrahydrofuraneinheiten ersetzt sind.

Bei dem erfindungsgemäßen Trägerungsverfahren wird die Lösung mit dem Übergangsmetallkomplex langsam, d.h. in möglichst kontrollierter Form, zum Trägermaterial gegeben, wobei die Vermengung mit diesem in der Regel durch Rühren oder mittels Schütteln oder Drehen des Reaktionsgefäßes unterstützt wird. Wichtig ist, daß während der Zugabe der Katalysatorlösung die durch das Trägermaterial gebildete Oberfläche erneuert wird. Besonders vorteilhaft ist es, wenn das Trägermaterial, z.B. mittels Rühren, mittels Drehen oder Schütteln des Reaktionsgefäßes oder mittels Durchleiten von Schutzgas durch das Trägermaterial, fortwährend umgewälzt wird, wodurch die durch dieses Trägermaterial gebildete Oberfläche ständig erneuert wird, so daß bereits bei der Zugabe der Lösung eine gleichmäßige Verteilung des Katalysators auf dem Träger erreicht wird.

In einer bevorzugten Ausführungsform wird die Lösung tropfenweise unter Schütteln oder schnellem Drehen des Reaktionsgefäßes zugegeben. Das eingesetzte Lösungsmittelvolumen wird im allgemeinen so bemessen, daß es das zweifache Porenvolumen des vorgelegten Trägermaterials nicht übersteigt. Bevorzugt entspricht das Lösungsmittelvolumen in etwa dem einfachen Porenvolumen des Trägermaterials.

Die Reaktionstemperatur liegt bei der Trägerung in der Regel im Bereich von -20 bis 100°C, wobei die Ober- und Untergrenzen auch durch die physikalischen Parameter der verwendeten flüssigen Medien vorgegeben werden. Aus Praktikabilitätsgründen bietet es sich an, die Trägerung bei Raumtemperatur bzw. in einem Temperaturintervall von 15 bis 35°C durchzuführen. Es ist weiterhin von Vorteil, wenn man nach vollständiger Zugabe der Katalysatorlösung die Suspension noch für einen bestimmten Zeitraum weiter rührt, schüttelt oder auf andere geeignete Art und Weise, zum Beispiel durch schnelle Rotation des Reaktionsgefäßes vermengt. Im allgemeinen ist hierfür ein Zeitraum von 0,1 bis 3, maximal bis 5 Stunden ausreichend. Üblicherweise wird mindestens über einen Zeitraum von 1 min nachvermengt. Das Trägerungsverfahren wird im allgemeinen unter einer Schutzgasatmosphäre durchgeführt. Geeignet als Schutzgas sind zum Beispiel Stickstoff oder Argon.

Vorteilhafterweise befreit man den geträgerten Übergangsmetallkatalysator von letzten Flüssigkeitsresten vor dem Einsatz für (Co)Polymerisationen im Labor- oder Technikummaßstab. Für großtechnische Anwendungen kann der Trocknungsschritt ohne weiteres auch ausgespart werden. Besonders schonend gelingt die Entfernung letzter Flüssigkeitsreste, indem man einen Inertgasstrom, beispielsweise einen Stickstoffstrom, durch den erhaltenen festen Rückstand leitet, vorzugsweise solange, bis der geträgerte Katalysator bis zur Rieselfähigkeit getrocknet ist. Daneben können letzte Flüssigkeitsreste auch im Vakuum entfernt werden.

Wird die Trägerung zum Beispiel unter Drehen des Reaktionsgefäßes vorgenommen, empfiehlt es sich, Reaktionsgefäße zu verwenden, deren Geometrie der Innenwandungen ein Umwälzen des Trägermaterials forciert. Bei kugelförmigen Reaktionsgefäßen wie Reaktionskolben können dieses z.B. eine oder mehrere Ausbuchtungen oder bogen- oder stabförmige Segmente sein. Eine bevorzugte Ausführungsform eines solchen Reaktionsgefäßes stellt Abbildung 1 dar.

Der Übergangsmetallkomplex wird nach dem beschriebenen Verfahren gleichmäßig auf dem partikulären Trägermaterial verteilt. Die gleichmäßige Verteilung über den gesamten Korndurchmesser kann mit Hilfe von SEM- ("Scanning Electron Microscopy") und WDX-(Wavelength Dispersive X-ray) Aufnahmen verifiziert werden.

Die gemäß den erfindungsgemäßen Verfahren erhältlichen Träger weisen üblicherweise eine Beladung im Bereich von 60 bis 99 % der Theorie auf. Eine Beladung im Bereich von 75 bis 95 % der Theorie läßt sich mit Hilfe der beschriebenen Verfahren ohne weiteres reproduzieren. Die Effektivität der Beladung ist unabhängig von der gewählten Korngröße des Trägermaterials und gelingt besonders vorteilhaft in einem Korngrößenbereich kleiner 500 µm und insbesondere kleiner 300 µm, d.h. bei herkömmlichen kommerziell erhältlichen Trägermaterialien erfolgt eine gleichmäßige Beladung über den gesamten Korngrößenbereich. Die mit den erfindungsgemäßen Katalysatoren erzielte Katalysatorbeladung liegt im allgemeinen im Bereich von 0,001 bis 1,0 mmol Metallkomplex/g Träger, besonders bevorzugt im Bereich von 0,01 bis 0,3 mmol/g.

Um inerte Reaktionsbedingungen zu gewährleisten, ist es empfehlenswert alle Lösungsmittel bzw. flüssigen Reaktionsmedien vor der Verwendung frisch zu destillieren.

Die nach den erfindungsgemäßen Verfahren erhältlichen geträgerten Übergangsmetallkatalysatoren lassen sich wirkungsvoll bei der Copolymerisation von Kohlenmonoxid mit olefinisch ungesättigten Verbindungen einsetzen. Geeignete Polymerisationsverfahren sind die Suspensionspolymerisation sowie insbesondere die Gasphasenpolymerisation.

Die Menge an bei der Kohlenmonoxidcopolymerisation eingesetztem geträgerten Katalysator kann sich in weiten Grenzen bewegen. In Abhängigkeit von der Größe des Reaktionsgefäßes und der Verfahrensweise kann die gesamte Katalysatormenge auf einmal oder auch sukzessive im Laufe der Reaktion zugegeben werden. Die Menge an eingesetztem geträgerten Katalysator hängt im allgemeinen entscheidend von den Reaktionsparametern ab und kann bei kleineren, in Batchfahrweise betriebenen Druckbehältern im mg-Bereich, bei größeren, kontinuierlich betriebenen Anlagen z.B. im 100 g-Bereich und darüber liegen.

Als olefinisch ungesättigte Verbindung kommen sowohl reine Kohlenwasserstoffverbindungen als auch heteroatomhaltige α-Olefine, wie (Meth)acrylsäureester oder -amide sowie Homoallyl- oder Allylalkohole, -ether oder -halogenide in Betracht. Unter den reinen Kohlenwasserstoffen sind insbesondere niedermolekulare Olefine, insbesondere α-Olefine mit 2 bis 8 C-Atomen, wie Ethen, Propen, 1-Buten, 1-Penten oder 1-Hexen, hervorzuheben. Selbstverständlich können auch cyclische Olefine, z.B. Cyclopenten, aromatische Olefinverbindungen, wie Styrol oder α-Methylstyrol, oder Vinylester, wie Vinylacetat, eingesetzt werden. Besonders bevorzugt werden Ethen oder Propen, insbesondere Ethen, oder Mischungen von Ethen mit niedermolekularen α-Olefinen, wie Propen oder 1-Buten, verwendet.

Das molare Verhältnis von Kohlenmonoxid zu α-Olefin oder zu einem Gemisch an α-Olefinen bewegt sich in der Regel im Bereich von 5:1 bis 1:5, üblicherweise werden Werte im Bereich von 2:1 bis 1:2 benutzt.

Die Copolymerisationstemperatur wird üblicherweise in einem Bereich von 0 bis 200°C eingestellt, wobei bevorzugt bei Temperaturen im Bereich von 20 bis 130°C gearbeitet wird. Der Druck liegt im allgemeinen im Bereich von 2 bis 300 bar und insbesondere im Bereich von 20 bis 220 bar.

Zur Katalysatoraktivierung wird auf geeignete Aktivatorverbindungen zurückgegriffen. Als Aktivatorverbindungen kommen solche Verbindungen in Frage, die über mindestens eine freie Hydroxylfunktionalität verfügen. Geeignet sind zum Beispiel Wasser oder Alkohole, insbesondere niedermolekulare Alkohole wie Methanol, Ethanol, n-Propanol, i-Propanol, n-Butanol oder i-Butanol, aber auch langkettige Alkohole wie Octanol oder Isodecanol sind für das erfindungsgemäße Verfahren nicht ungeeignet. Bevorzugt wird Methanol verwendet. Des weiteren kommen als Aktivatoren organische Verbindungen in Betracht, die neben einer Hydroxylgruppe auch mit einer lewisbasischen Gruppe versehen sind. Als lewisbasische Gruppen kommen Ether, Ester, Ketone, Amine, Phosphane sowie insbesondere Nitrile oder tertiäre Amine in Frage.

Weitere Aktivatoren können unter den Boranverbindungen, insbesondere den Boranen mit aromatischen Resten wie Tris(pentafluorphenyl)boran, Triphenylboran, Tris(p-chlorphenyl)boran oder Boronsäuren ausgewählt werden. Besonders geeignet ist zum Beispiel Tris(3,5-bis-(trifluormethyl)phenyl)boran.

Zur Aktivierung des geträgerten Katalysators bedarf es in der Regel nur einer geringen Menge an Aktivatorverbindung. Häufig ist für Boranverbindungen bereits eine Menge, bezogen auf die Menge an geträgertem Übergangsmetallkomplex, im Bereich von 0,1 bis 2000 Gew.-%, bevorzugt 0,1 bis 1000 Gew.-%, bezogen auf die Menge an auf dem Träger aufgebrachten Übergangsmetallkomplex, ausreichend.

Die Aktivatormenge bewegt sich bei hydroxylgruppenhaltigen Verbindungen im allgemeinen im Bereich oberhalb der 10-fachen, bevorzugt oberhalb der 500-fachen und besonders bevorzugt oberhalb der 2000-fachen molaren Menge, bezogen auf die molare Menge an Übergangsmetallkomplex, die auf den Träger aufgebracht wird. Auch bei einem 100000-fachen molaren Überschuß kann die Polymerisation durchgeführt werden. Üblicherweise wird eine hydroxygruppenhaltige Aktivatorverbindung im 500- bis 10000-fachen, bevorzugt im 2000- bis 10000-fachen molaren Überschuß eingesetzt.

Die in Gegenwart des geträgerten Katalysatorsystems durchgeführte Copolymerisation kann sowohl den Bedingungen der Suspensions- als auch der Gasphasenpolymerisation unterworfen werden.

Die Suspensionspolymerisation ist an sich bekannt. Üblicherweise geht man so vor, daß man in einem Suspensionsmittel, vorzugsweise in einem aliphatischen Kohlenwasserstoff polymerisiert. Die Polymerisationstemperaturen liegen im allgemeinen im Bereich von -20 bis 115°C, der Druck im allgemeinen im Bereich von 1 bis 200 bar. Der Feststoffgehalt der Suspension liegt üblicherweise im Bereich von 1 bis 60 %. Es kann sowohl diskontinuierlich, z.B. in Rührautoklaven, als auch kontinuierlich, z.B. in Rohrreaktoren, Schlaufenreaktoren oder Rührkesselkaskaden gearbeitet werden.

Für die Suspensionspolymerisation können inerte halogenierte oder nicht-halogenierte aliphatische oder aromatische Kohlenwasserstoffe verwendet werden, die über keine freie Hydroxylgruppe verfügen. Exemplarisch seien Dichlormethan, Tetrachlorethan, Tetrahydrofuran, Diethylether, Acetonitril, Toluol, Ethylbenzol, Chlorbenzol oder i-Butan, Pentan, Hexan, Heptan, Octan, Nonan, Decan, Isododecan oder deren Strukturanaloga genannt. Auch beliebige Gemische der genannten Lösungs- bzw. Suspensionsmittel sind möglich. In der Regel wird für das erfindungsgemäße Verfahren auf aliphatische Kohlenwasserstoffe zurückgegriffen, wobei i-Butan oder n-Pentan das bevorzugte Medium ist.

Polymerisationen in der Gasphase finden bevorzugt in der gerührten Gasphase oder nach dem Wirbelschichtverfahren statt. Im allgemeinen liegen die Temperaturen dabei im Bereich von 0 bis 150°C, bevorzugt von 20 bis 100°C. Geeignete Drücke liegen in der Regel im Bereich von 1 bis 200 bar, bevorzugt von 20 bis 100 bar. Es empfiehlt sich unter inerten Bedingungen, d.h. unter Ausschluß von Luft/Sauerstoff und Feuchtigkeit zu arbeiten. Geeignete Rührer für die gerührte Gasphase sind zum Beispiel Wendel-, Anker-, Impeller- oder Schaufelrührer. Bei dem Polymerisationstyp der gerührten Gasphase legt man vorteilhafterweise zu Beginn der Reaktion eine bestimmte Menge an Feststoff vor. Hierbei kann es sich sowohl um ein Kohlenmonoxidcopolymer handeln, das mit dem zu synthetisierenden übereinstimmt oder diesem ähnlich ist, oder um einen beliebigen anderen partikulären, inerten Feststoff wie Steinsalz. Die Polymerisation in der Gasphase kann durch Ablassen der Reaktionsgase und Austrag des Copolymers abgebrochen werden. Der geträgerte Katalysator und der Cokatalysator können gemeinsam oder nacheinander in beliebiger Reihenfolge in das Reaktionsgefäß gegeben werden. Dieses kann unter Verwendung von Schutzgas bzw. eines Schutzgasüberdruckes oder eines Gemisches der Reaktionsgase erfolgen. Der geträgerte Katalysator sowie der Cokatalysator können vorgelegt oder nach Zugabe der Monomeren beigemengt werden. Auch eine sukzessive Zugabe ist möglich.

In den erfindungsgemäßen Verfahren werden mittlere Katalysatorproduktivitäten erhalten, die im allgemeinen größer 1,5 kg Polymer/g (Metall)/h sind. Es können auch Produktivitäten größer 7,0 kg Polymer/g (Metall)/h erzielt werden.

Mit dem erfindungsgemäßen Trägerungsverfahren werden große Lösungsmittelmengen und damit aufwendige Trennoperationen vermieden. Weiterhin kann das gesamte Trägerungsverfahren sowie die (Co)polymerisation unter Verwendung des erhaltenen geträgerten Katalysators in nur einer Reaktionsapparatur erfolgen. Nach dem erfindungsgemäßen Trägerungsverfahren gelingt eine hohe und gleichmäßige Beladung des Trägers mit aktiven Katalysatorzentren. Die erhaltenen Katalysatoren zeigen zudem bereits in Gegenwart sehr geringer Mengen an Cokatalysator eine hohe Aktivität.

Das erfindungsgemäße Verfahren eröffnet einen präparativ einfachen sowie einen ökonomischen Zugang zu geträgerten Katalysatoren. Dadurch, daß vielfältige Trägermaterialien und auch Trägerformen bzw. -größen in Frage kommen, läßt sich die Morphologie von Polymerprodukten gezielt steuern. Die nach den erfindungsgemäßen Verfahren erhältlichen Katalysatoren verfügen des weiteren auch nach mehreren Stunden Reaktionszeit über eine hohe mittlere Katalysatoraktivität.

Die vorliegende Erfindung wird anhand der nachfolgenden Beispiele näher erläutert.

Beispiele

Abkürzungen:

$Pd(OAc)_2$ Palladiumdiacetat

dpmpa Bis(diphenylphosphinomethyl)phenylamin
dppp Bis(diphenylphosphino)propan

Bei dem in den nachfolgenden Beispielen verwendeten Silicagel handelt es sich um Material mit der Bezeichnung ES70x der Firma Crosfield sowie um Material mit der Bezeichnung SG 332 der Firma Grace. Die mittlere Korngröße von ES70x-Material lag gemäß Angaben des Herstellers bei 52 µm, die BET-Oberfläche bei 312 $m^2/g$ und das Porenvolumen bei 1,69 ml/g. Das SG 332-Material wies eine mittlere Korngröße von 50 µm, eine BET-Oberfläche von 320 $m^2/g$ und ein Porenvolumen von 1,75 ml/g auf. Vor der Verwendung wurde das Silicagel bei 200°C im Hochvakuum 20 Stunden calciniert. Alle verwendeten Lösungsmittel bzw. Flüssigkeiten waren sauerstoff- und wasserfrei und wurden vor der Verwendung nach allgemein bekannten Verfahren destillativ von Restwasserspuren befreit. Die Herstellung der geträgerten Übergangsmetallkatalysatoren wurde unter Stickstoffatmosphäre durchgeführt.

A) Herstellung des Chelatliganden

Beispiel 1:

Bis(diphenylphosphinomethyl)phenylamin

Paraformaldehyd (2,56 g) wurde in Toluol (120 ml) suspendiert und bei 65°C mit Phenylamin (3,96 g; 42,6 mmol) und Diphenylphosphan (15,86 g) versetzt. Die Reaktion wurde 4 h unter Rückfluß gehalten, das Lösungsmittel im Vakuum entfernt und der Rückstand in Dichlormethan gelöst. Das Produkt wurde durch Zugabe von Ethanol, ggf. in der Kälte, ausgefällt, abfiltriert und nach Trocknen im Vakuum als weißes Pulver erhalten (80 % Ausbeute).

B) Herstellung der Metallkomplexe

Beispiel 2:

a) Herstellung von (Bis(diphenylphosphinomethyl)phenylamin-palladium-bis-acetonitril)bis(tetrafluoroborat)

i) Zu 2,0 g (COD)$PdCl_2$ (COD = Cyclooctadien) in 50 ml Dichlormethan gab man 3,43 g dpmpa in 20 ml Dichlormethan. Die Lösung wurde eine Stunde bei Raumtemperatur gerührt, das Volumen auf die Hälfte reduziert und der Komplex durch Zugabe von Diethylether ausgefällt. Der hellgelbe Feststoff ((dpmpa)$PdCl_2$) wurde abfiltriert, mit mehreren Portionen Diethylether gewaschen und im Vakuum getrocknet. Ausbeute: 85 % (COD)$PdCl_2$ wurde nach der Vorschrift von Drew et al., Inorg. Synth. 13 (1972), 52 hergestellt (Ausbeute: 93 %)).

ii) Der Palladiumdichlorid-bis(diphenylphosphinomethyl)-phenylamin-Komplex (1,23 g) wurde in 20 ml Acetonitril gelöst. Anschließend wurde Silbertetrafluoroborat (760 mg) zugegeben, die Mischung 1 h bei Raumtemperatur gerührt, der gebildete Niederschlag abfiltriert und aus dem Filtrat durch Einengen und Zugeben von Diethylether das Produkt als orange-gelber Feststoff isoliert.

Beispiel 3:

b) Der entsprechende dppp-Komplex ([(dppp)Pd $(CH_3CN)_2$]$(BF_4)_2$) wurde analog zu a) synthetisiert.

Beispiel 4:

c) Herstellung von (Bis(diphenylphosphinomethyl)phenylamin-palladium-bis-acetonitril)bis(tetrakis(3,5-bis(trifluormethyl)phenyl)borat)
(Bis(diphenylphosphinomethyl)phenylamin-palladium-bis-acetonitril)bis(tetrafluoroborat) (0,31 g) wurde mit Natrium-tetrakis(3,5-bis(trifluormethyl)phenyl)borat (s.a. M. Brookhart, Organometallics 1992 (11),3920-3922 (0,82 g) bei Raumtemperatur in Acetonitril (50 ml) umgesetzt. Gebildetes Natriumtetrafluoroborat wurde abfiltriert,

das Lösungsmittel im Vakuum entfernt, der Rückstand in Dichlormethan aufgenommen, nochmals filtriert und erneut im Vakuum eingeengt. Es wurde ein hellgelber Feststoff in quantitativer Ausbeute erhalten.

Beispiel 5:

d) Herstellung von (1,3-Bis(diphenylphosphino)propan-palladium-bis-acetonitril)bis(tetrakis(3,5-bis(trifluormethyl)phenyl)borat) (K-1)

Vorgehensweise analog Beispiel c) mit dem Unterschied, daß als Ausgangskomplex 1,3-Bis(diphenylphosphino)propan-palladium-bis-acetonitril)bis(tetrafluoroborat) eingesetzt wurde. Das Produkt ist ein weißer Feststoff ($^{31}$P-NMR: $\delta$ = 15,56 ppm in $CD_2Cl_2$).

C) Herstellung der geträgerten Übergangsmetallkomplexe

Beispiel 6:

a) Calciniertes Silicagel SG 332 (5,0 g) wurde in einem sich drehenden Rundkolben gemäß Abbildung 1 mit einem Volumen von 250 ml bei Raumtemperatur mit [(dppp) Pd $(CH_3CN)_2$] $(B[C_6H_3\ (CF_3)_2]_4)_2$ (K-1) (0,51 g) in Dichlormethan (15 ml) über einen Zeitraum von 1,5 h tropfenweise versetzt. Nach Beendigung der Zugabe wurde das erhaltene Reaktionsgemisch für eine weitere Stunde bei Raumtemperatur durch Drehen des Reaktionsgefäßes umgewälzt. Anschließend wurde das Lösungsmittel bei einem Druck von 1 mbar entfernt. Letzte Lösungsmittelreste wurden im Hockvakuum entfernt.

Elementaranalyse: 0,035 mmol K-1/g(Träger)
Beladung: 80 % d. Th.

Gemäß Beispiel 6 erhaltene geträgerte Kornpartikel wurden mittels SEM (Scanning Electron Microscopy) und WDX (Wavelength Dispersive X-ray) Techniken vermessen. Die erhaltenen WDX-Linescan-Aufnahmen sind in Abbildung 2 wiedergegeben und zeigen eine gleichmäßig hohe Palladiumverteilung über den gesamten Partikeldurchmesser.

Beispiel 7:

b) Eine Lösung aus [(dppp)Pd$(CH_3CN)_2$]$(B[C_6H_3(CF_3)_2]_4)_2$ (1,65 g)(K-1) in Dichlormethan (49 ml) wurde innerhalb von 4 h unter langsamen Drehen des Reaktionsgefäßes auf calciniertes Silikagel ES70x (14,4 g) aufgetragen. Es wurde eine weitere Stunde bei Raumtemperatur gerührt, das Lösungsmittel unter geringem Unterdruck (1mbar) entfernt und der geträgerte Katalysator bis zur Rieselfähigkeit im Hochvakuum von letzten Lösungsmittelresten befreit.

Elementaranalyse: 0,039 mmol K-1/g(Träger)
Beladung: 78 % d. Th.

Beispiel 8:

c) Calciniertes Silicagel SG 332 (5,0 g) wurde in einem sich drehenden Rundkolben gemäß Abbildung 1 bei Raumtemperatur mit [(dpmpa)Pd $(CH_3CN)_2$]$(B[C_6H_3(CF_3)_2]_4)_2$ (0,67 g) (K-2) im Dichlormethan (15 ml) über einen Zeitraum von 1,5 h tropfenweise versetzt. Es wurde analog Beispiel (a) verfahren.

Elementaranalyse: 0,037 mmol K-2/g (Träger)
Beladung: 75 % d. Th.

D) Kohlenmonoxidcopolymerisation

Beispiel 9:

In einen 1,2 1-Autoklav gab man geträgerten Übergangsmetallkomplex gemäß Beispiel 6 (1,42 g), n-Pentan (300 ml) und Propen (50 g). Mit einem Kohlenmonoxid/Ethen-Gasgemisch (1:1) wurde ein Vordruck von 40 bar eingestellt, Methanol (10 ml) zugegeben und die Temperatur auf 75°C erhöht. Anschließend wurde Kohlenmonoxid/Ethen (1:1) bis zu einem Enddruck von 60 bar aufgepreßt und die Copolymerisation für 3 h unter diesen Bedingungen gehalten. Durch Abkühlen auf Raumtemperatur und Entspannen des Reaktionsgefäßes auf Atmosphärendruck wurde die Reaktion abgebrochen. Das erhaltene Copolymer wurde mit Methanol gewaschen und bei 80°C bei einem Druck von 1 mbar von letzten Lösungsmittelresten befreit.

Ausbeute: 112 g
Viskositätszahl: 699 ml/g (0,5 Gew.-% in ortho-Dichlorbenzol/Phenol 1/1)
Mittlere Katalysatoraktivität: 7,04 kg(Terpolymer)/g(Pd)/h

Die Abbildung 3 zeigt eine lichtmikroskopische Aufnahme der erhaltenen Polymerpartikel bei 125-facher Vergrößerung (Suspension in Wasser).

Beispiel 10:

In einem 1,2 l-Autoklav gab man geträgerten Übergangsmetallkomplex gemäß Beispiel 8 (1,28 g) und n-Pentan (300 ml). Mit einem Kohlenmonoxid/Ethen-Gasgemisch (1:1) wurde ein Vordruck von 40 bar eingestellt, Methanol (10 ml) zugegeben und die Temperatur auf 75°C erhöht. Anschließend wurde Kohlenmonoxid/Ethen (1:1) bis zu einem Enddruck von 60 bar aufgepreßt und die Copolymerisation für 3 h unter diesen Bedingungen gehalten. Durch Abkühlen auf Raumtemperatur und Entspannen des Reaktionsgefäßes auf Atmosphärendruck wurde die Reaktion abgebrochen. Das erhaltene Copolymer wurde mit Methanol gewaschen und bei 80°C im Hochvakuum über Nacht von letzten Lösungsmittelresten befreit.

Ausbeute: 84 g
Viskositätszahl: 936 ml/g (0,5 Gew.-% in ortho-Dichlorbenzol/Phenol 1/1)
Mittlere Katalysatoraktivität: 5,27 kg(Copolymer)/g(Pd)/h

Die Abbildung 4 zeigt eine lichtmikroskopische Aufnahme der erhaltenen Polymerpartikel bei 125-facher Vergrößerung (Suspension in Wasser).

**Patentansprüche**

1. Verfahren zur Herstellung von geträgerten Übergangsmetallkatalysatoren, dadurch gekennzeichnet, daß man zu einem partikulären organischen oder anorganischen Trägermaterial unter Erneuern der durch das Trägermaterial gebildeten Oberfläche langsam die Lösung eines definierten Übergangsmetallkomplexes auf der Basis der Elemente der Gruppen VIIIB, IB und IIB des Periodensystems der Elemente gibt, der gegebenenfalls ein Cokatalysator beigefügt ist, wobei das Volumen der Lösung das zweifache Porenvolumen des Trägermaterials nicht übersteigt.

2. Verfahren nach Anspruch 1, dadurch gekennzeichnet, daß man nach vollständiger Zugabe der Lösung, enthaltend einen definierten Übergangsmetallkomplex und gegebenenfalls einen Cokatalysator, das erhaltene Gemisch weiter miteinander vermengt.

3. Verfahren nach den Ansprüchen 1 oder 2, dadurch gekennzeichnet, daß man das Lösungsmittel von dem geträgerten Übergangsmetallkatalysator entfernt.

4. Verfahren nach den Ansprüchen 1 bis 3, dadurch gekennzeichnet, daß man als definierten Übergangsmetallkomplex eine Verbindung der allgemeinen Formel (I)

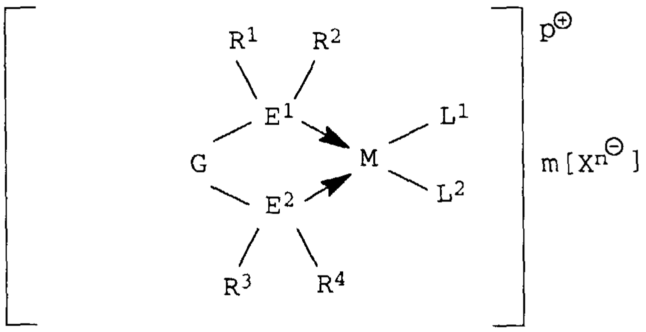

(I)

in der die Substituenten und Indizes die folgende Bedeutung haben:

G — $-(CR^b{}_2)_r-$, $-(CR^b{}_2)_s-Si(R^a)_2-(CR^b{}_2)_t-$, -A'-O-B'- oder $-A'-Z(R^5)-B'-$ mit

$R^5$ — Wasserstoff, unsubstituiertes oder mit einer funktionellen Gruppe auf Basis der nichtmetallischen Elemente der Gruppen IVA, VA, VIA oder VIIA des Periodensystems der Elemente substituiertes $C_1$- bis $C_{20}$-Alkyl, $C_3$- bis $C_{10}$-Cycloalkyl, $C_6$- bis $C_{15}$-Aryl oder Alkylaryl mit 1 bis 10 C-Atomen im Alkylrest und 6 bis 15 C-Atomen im Arylrest, $-N(R^b)_2$, $Si(R^c)_3$ oder einen Rest der allgemeinen Formel II

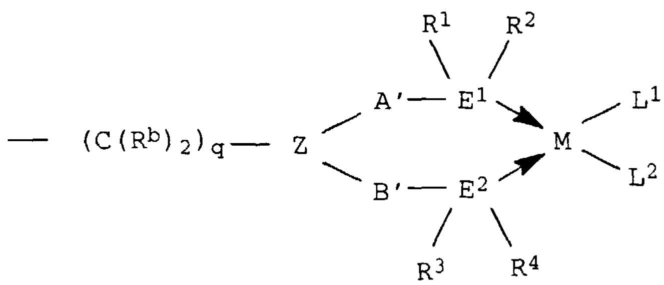

(II),

in der

q — eine ganze Zahl von 0 bis 20 bedeutet und die weiteren Substituenten in (II) die gleiche Bedeutung wie in (I) haben,

A', B' — $-(CR^b{}_2)_{r'}-$, $-(CR^b{}_2)_s-Si(R^a)_2-(CR^b{}_2)_t-$, $-N(R^b)-$, ein r'-, s- oder t-atomiger Bestandteil eines Ringsystems oder zusammen mit Z ein (r'+1)-, (s+1)- oder (t+1)-atomiger Bestandteil eines Heterocyclus,

$R^a$ — unabhängig voneinander lineares oder verzweigtes $C_1$- bis $C_{20}$-Alkyl, $C_3$- bis $C_{10}$-Cycloalkyl, $C_6$- bis $C_{15}$-Aryl, mit funktionellen Gruppen auf der Basis der nichtmetallischen Elemente der Gruppen IVA, VA, VIA oder VIIA des Periodensystems substituiertes $C_6$- bis $C_{15}$-Aryl, Alkylaryl mit 1 bis 10 C-Atomen im Alkylteil und 6 bis 15 C-Atomen im Arylteil,

$R^b$ — wie $R^a$ und zusätzlich Wasserstoff und $Si(R^c)_3$,

$R^c$ — lineares oder verzweigtes $C_1$- bis $C_{20}$-Alkyl, $C_3$- bis $C_{10}$-Cycloalkyl, $C_6$- bis $C_{15}$-Aryl oder Alkylaryl mit 1 bis 10 C-Atomen im Alkylteil und 6 bis 15 C-Atomen im Arylteil,

r — 1, 2, 3 oder 4 und

r' — 1 oder 2,

s, t — 0, 1 oder 2, wobei $1 \leq s+t \leq 3$

| | |
|---|---|
| Z | ein Element aus der Gruppe VA des Periodensystems der Elemente |
| M | ein Metall ausgewählt aus den Gruppen VIIIB, IB oder IIB des Periodensystems der Elemente, |
| $E^1$, $E^2$ | ein nichtmetallisches Element aus der Gruppe VA des Periodensystems der Elemente, |
| $R^1$ bis $R^4$ | lineares oder verzweigtes $C_1$- bis $C_{20}$-Alkyl, $C_3$- bis $C_{10}$-Cycloalkyl, $C_6$- bis $C_{15}$-Aryl, Alkylaryl mit 1 bis 10 C-Atomen im Alkylrest und 6 bis 15 C-Atomen im Arylrest, Heteroaryl, mit funktionellen Gruppen auf der Basis der nichtmetallischen Elemente der Gruppen IVA, VA, VIA oder VIIA des Periodensystems substituiertes lineares oder verzweigtes $C_1$- bis $C_{28}$-Alkyl, $C_6$- bis $C_{15}$-Aryl, Alkylaryl mit 1 bis 10 C-Atomen im Alkylrest und 6 bis 15 C-Atomen im Arylrest oder Heteroaryl, |
| $L^1$, $L^2$ | formal geladene oder neutrale Liganden, |
| X | formal ein- oder mehrwertige Anionen, |
| p | 0, 1, 2, 3 oder 4, |
| m, n | 0, 1, 2, 3 oder 4, |
| wobei | $p = m \times n$, |

verwendet.

5. Verfahren nach den Ansprüchen 1 bis 4, dadurch gekennzeichnet, daß das Volumen der Lösung des Übergangsmetallkomplexes das Porenvolumen des eingesetzten Trägermaterials nicht übersteigt.

6. Verfahren nach den Ansprüchen 1 bis 5, dadurch gekennzeichnet, daß die Oberfläche des eingesetzten Trägermaterials einen pH-Wert im Bereich von 3,0 bis 7,0 aufweist.

7. Verwendung der gemäß den Ansprüchen 1 bis 6 erhaltenen geträgerten Übergangsmetallkomplexe für die Herstellung von linearen, alternierenden Copolymeren aus Kohlenmonoxid und $\alpha$-olefinisch ungesättigten Verbindungen.

8. Verfahren zur heterogen-katalytischen Herstellung von linearen, alternierenden Copolymeren aus Kohlenmonoxid und $\alpha$-olefinisch ungesättigten Verbindungen, dadurch gekennzeichnet, daß man die Copolymerisation in Gegenwart einer Aktivatorverbindung und eines gemäß den Ansprüchen 1 bis 6 erhaltenen geträgerten Übergangsmetallkomplexes durchführt.

9. Verfahren nach Anspruch 8, dadurch gekennzeichnet, daß man als Aktivatorverbindung eine hydroxylgruppenhaltige oder eine Boranverbindung einsetzt.

10. Verfahren nach den Ansprüchen 8 oder 9, dadurch gekennzeichnet, daß man das Trägerungsverfahren gemäß den Ansprüchen 1 bis 6 und die anschließende Kohlenmonoxidcopolymerisation unter Verwendung des nach dem Trägerungsverfahren erhaltenen geträgerten Übergangsmetallkatalysators in demselben Reaktionsbehältnis durchführt.

# FIG.1

a) Reaktionskolben-Aufsicht

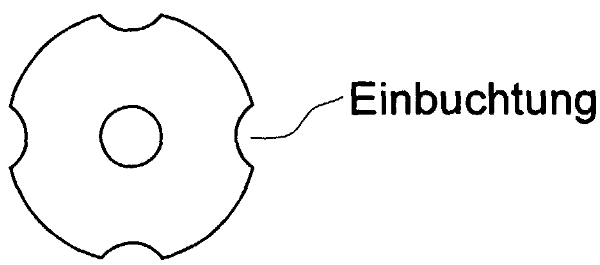


b) Reaktionskolben-Seitenansicht

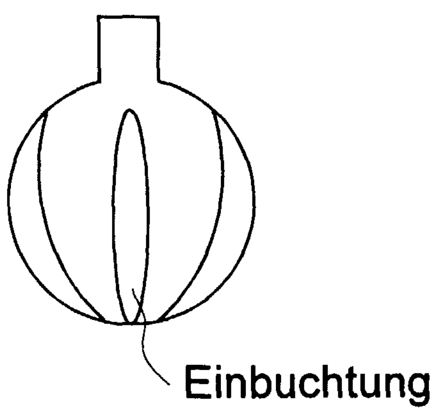

FIG.2

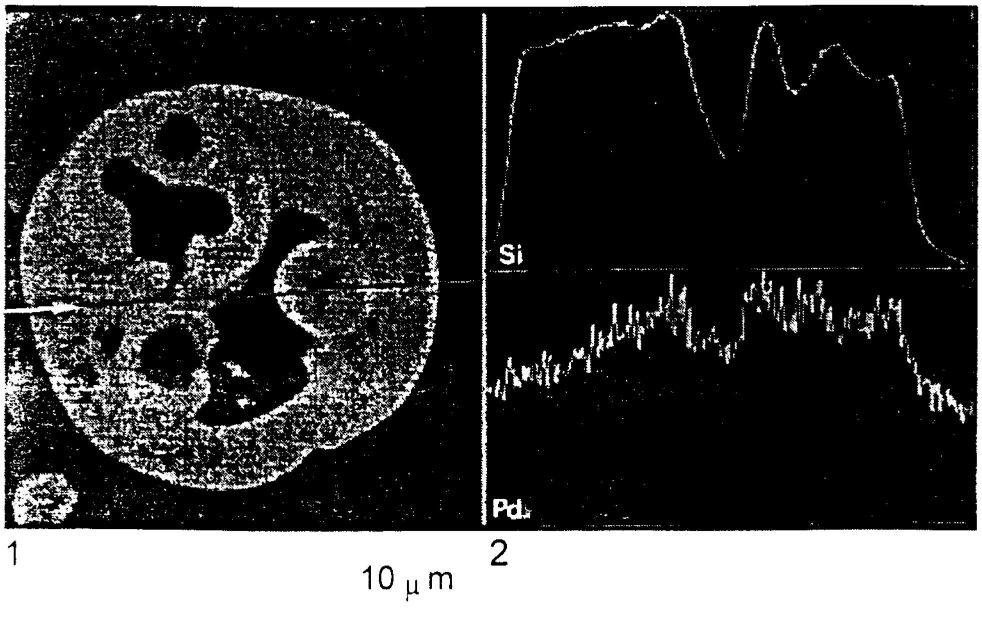


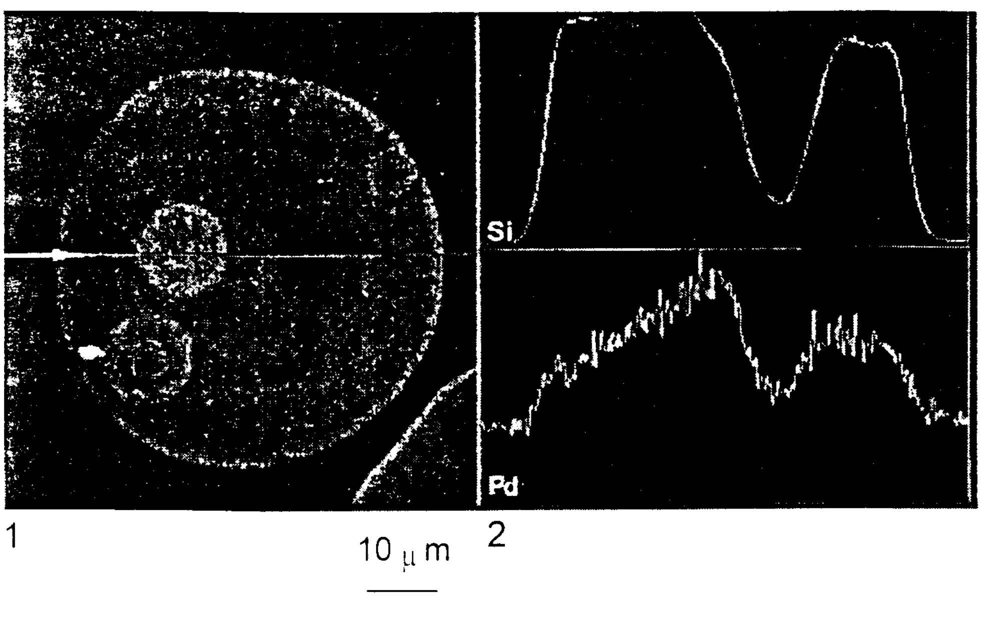

FIG.3

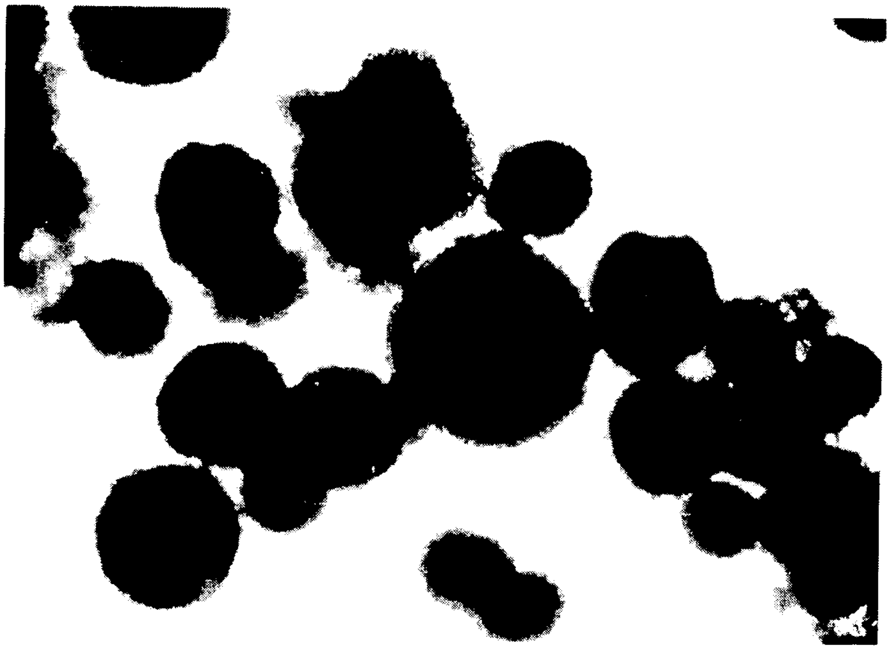

FIG.4

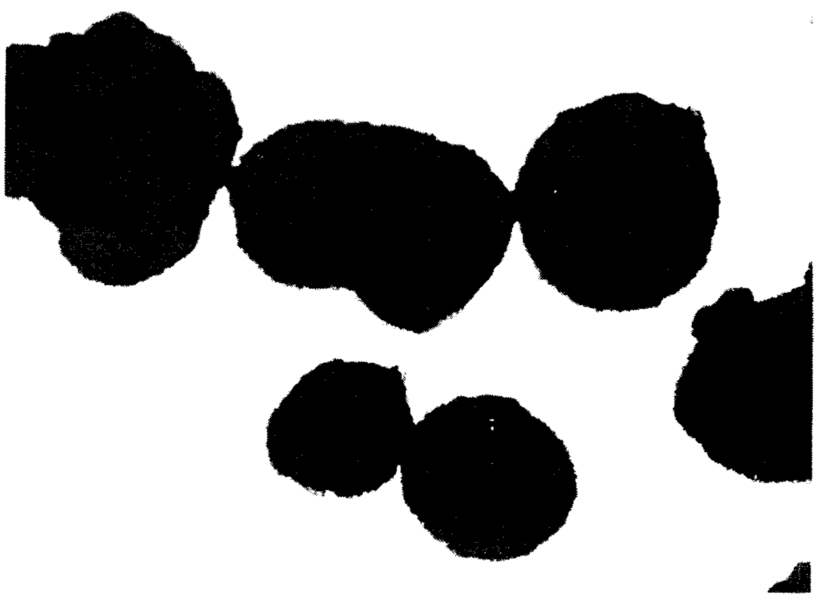

Europäisches Patentamt

# EUROPÄISCHER RECHERCHENBERICHT

Nummer der Anmeldung
EP 99 11 1278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D<br>A | EP 0 722 968 A (BP CHEMICALS)<br>24. Juli 1996 (1996-07-24)<br>* Spalte 3, Zeile 22 - Zeile 23; Beispiel 1 *<br>--- | 7-9<br>1-6 | C08G67/02<br>B01J31/24<br>B01J31/18 |
| D,X<br>A | EP 0 559 288 A (ENICHEM SPA)<br>8. September 1993 (1993-09-08)<br>* Ansprüche; Beispiele *<br>--- | 7-9<br>1-6 | |
| D,X<br>A | EP 0 559 289 A (ENICHEM SPA)<br>8. September 1993 (1993-09-08)<br>* Spalte 6, Zeile 24 - Zeile 32; Ansprüche *<br>--- | 7-10<br>1-6 | |
| D,P,X | DE 197 46 279 A (BASF AG)<br>22. April 1999 (1999-04-22)<br>* Seite 7, Zeile 35 - Seite 8, Zeile 52; Ansprüche *<br>& WO 99 20678 A<br>--- | 1-10 | |
| X<br>A | EP 0 511 713 A (SHELL INT RESEARCH)<br>4. November 1992 (1992-11-04)<br>* Ansprüche; Beispiele *<br>--- | 7-9<br>1-6 | **RECHERCHIERTE SACHGEBIETE (Int.Cl.6)** |
| X<br>A | EP 0 404 228 A (SHELL INT RESEARCH)<br>27. Dezember 1990 (1990-12-27)<br>* Ansprüche; Beispiele *<br>----- | 7-9<br>1-6 | C08G<br>B01J |

Der vorliegende Recherchenbericht wurde für alle Patentansprüche erstellt

| Recherchenort | Abschlußdatum der Recherche | Prüfer |
|---|---|---|
| BERLIN | 20. September 1999 | Boeker, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 99 11 1278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-1999

| Im Recherchenbericht angeführtes Patentdokument | Datum der Veröffentlichung | Mitglied(er) der Patentfamilie | Datum der Veröffentlichung |
|---|---|---|---|
| EP 0722968 A | 24-07-1996 | JP 8231708 A | 10-09-1996 |
| EP 0559288 A | 08-09-1993 | IT 1254496 B | 25-09-1995 |
| | | AT 154814 T | 15-07-1997 |
| | | CA 2091028 A | 06-09-1993 |
| | | DE 69311749 D | 31-07-1997 |
| | | DE 69311749 T | 27-11-1997 |
| | | DK 559288 T | 01-12-1997 |
| | | ES 2103056 T | 16-08-1997 |
| | | JP 5339368 A | 21-12-1993 |
| | | US 5314856 A | 24-05-1994 |
| | | US 5408030 A | 18-04-1995 |
| EP 0559289 A | 08-09-1993 | IT 1254498 B | 25-09-1995 |
| | | AT 154815 T | 15-07-1997 |
| | | CA 2091029 A | 06-09-1993 |
| | | DE 69311750 D | 31-07-1997 |
| | | DE 69311750 T | 27-11-1997 |
| | | DK 559289 T | 27-10-1997 |
| | | ES 2105072 T | 16-10-1997 |
| | | JP 6172514 A | 21-06-1994 |
| | | US 5324701 A | 28-06-1994 |
| DE 19746279 A | 22-04-1999 | WO 9920678 A | 29-04-1999 |
| EP 0511713 A | 04-11-1992 | AU 650335 B | 16-06-1994 |
| | | AU 1527592 A | 05-11-1992 |
| | | CA 2067607 A | 02-11-1992 |
| | | CN 1066276 A,B | 18-11-1992 |
| | | DE 69222462 D | 06-11-1997 |
| | | DE 69222462 T | 05-02-1998 |
| | | JP 5140301 A | 08-06-1993 |
| | | US 5340787 A | 23-08-1994 |
| | | US 5237047 A | 17-08-1993 |
| EP 0404228 A | 27-12-1990 | CA 2018760 A | 14-12-1990 |
| | | DE 69014154 D | 22-12-1994 |
| | | JP 3031322 A | 12-02-1991 |
| | | US 5055552 A | 08-10-1991 |

EPO FORM P0461

Für nähere Einzelheiten zu diesem Anhang : siehe Amtsblatt des Europäischen Patentamts, Nr.12/82